# EUROPEAN PATENT APPLICATION

(11) **EP 1 842 902 A1**
(43) Date of publication of application: **10.10.2007**
(21) Application number: 06712117.8
(22) Date of filing: 20.01.2006
(51) Int. Cl.: C12G 3/02, C12C 5/00

(54) **METHOD OF PRODUCING FOAMING ALCOHOLIC DRINK AND FOAMING ALCOHOLIC DRINK PRODUCED BY USING THE METHOD**

(30) Priority: 20.01.2005 JP 2005012714; 07.10.2005 JP 2005295287
(71) Applicant: Sapporo Breweries Limited, Tokyo 150-8522 (JP)
(72) Inventor: KIMURA, Tatsuji, SAPPORO BREWERIES LIMITED, Yaizu-shi, Shizuoka, 425-0013 (JP); YOKOI, Shigehisa, SAPPORO BREWERIES LIMITED, Funabashi-Shi, Chiba, 273-0014 (JP); FUKUHARA, Syunsuke, SAPPORO BREWERIES LIMITED, Yaizu-shi, Shizuoka, 425-0013 (JP); NAKAMURA, Takeshi, SAPPORO BREWERIES LIMITED, Yaizu-shi, Chiba, 273-0014 (JP); KAWAMURA, Atsuki, Sapporo Breweries Limited, Tokyo, 1508522 (JP)
(74) Representative: Billington, Lawrence Emlyn
(86) International application number: PCT/JP2006/300892
(87) International publication number: WO 2006/077988

(57) **Abstract**

A production method of a beer-taste alcoholic beverage with foaming properties which does not use barley, wheat and malt, in which a proteolytic enzyme improving generating foam and foam stability is used as a part of a substance of raw materials, and the alcoholic beverage with foaming properties produced by the production method are disclosed.

The production method of an alcoholic beverage with foaming properties, in which a pre-fermentation liquid is processed using a syrup containing sources of carbon, sources of nitrogen, hops, coloring matter, an improving substance for generating foam and for foam stability, and water as raw materials without using barley, wheat and malt, and the pre-fermentation liquid is fermented using a brewers*'* yeast. A proteolytic enzyme which has high enzymatic activity of the end-type protease activity and partially decomposes macro molecular protein is added into a mashing process as one part of a substance of raw materials together with pea protein, and a enzymatic reaction is performed. Thereby the production method of the alcoholic beverage with foaming properties having improved foaming properties and the alcoholic beverage with foaming properties produced by the production method can be provided. Also, the suitable ratio for the using amount of the added proteolytic enzyme having high enzymatic activity of the end-type protease is preferably 0.5 - 2% of the enzymatic amount per pea protein as a substrate which is condensed 10 fold, the reaction temperature of the enzyme is preferably 80 - 85 °C, and the reaction time is preferably 30 minutes.

## Description

### BACKGROUND OF THE INVENTION

### 1. Field of the Invention

This invention generally relates to a production method of an alcoholic beverage with foaming properties, and the alcoholic beverage with foaming properties which is produced by the production method.

In detail, this invention relates to the production method of the alcoholic beverage with foaming properties like beer-taste alcoholic beverages with foaming properties, in which a pre-fermentation liquid is processed using a syrup containing sources of carbon, sources of nitrogen, hops, coloring matter, an improving substance for generating foam and for foam stability, and water as raw materials without using barley, wheat and malt. The pre-fermentation liquid is fermented using a brewers' yeast, wherein protein which is used as a source of nitrogen or an improving substance for generating foam and for foam stability is utilized effectively; and to the alcoholic beverage with foaming properties which is produced by the production method.

### 2. Description of the Related Art

Conventionally, there are alcoholic beverages such as beer and low-malt beer which use malt as main material. The malt as a main material greatly contributes to flavor and quality of the foam (the foam stability and the generating foam) for beer and low-malt beer.

On the other hand, beer-taste alcoholic beverages with foaming properties without using barley, wheat and malt with having flavor and foam stability and generating foam have been developed and are selling in the market place.

To be concrete, a raw material liquid is processed using a syrup containing sources of carbon, sources of nitrogen such as amino acids containing substances, water, hops, coloring matter and an improving substance for generating foam and for foam stability and in addition adding flavors as necessary, the raw material liquid is fermented using a brewers' yeast the same as the usual processing process for beer to produce the beer-taste alcoholic beverage with foaming properties. Thereby, the alcoholic beverage which is produced has a characteristic in its refreshing taste.

In the alcoholic beverages with foaming properties without using barley, wheat and malt, as materials for contributing to the above unique taste (its taste is similar to beer and low-malt beer, and refreshing) and an improvement for generating foam and for foam stability, substances of sources of nitrogen or an improving substance for generating foam and for foam stability are listed. For example, corn, potatoes, peas, soy beans and proteins which are extracted from rice are suitable for sources of nitrogen. Also, peas, proteins which are extracted from soy beans, soy bean saponin, a yucca saponin, a quillai saponin, a tea saponin, plant extraction saponin system materials such as Koma carrot saponins, egg white peptide, protein system materials such as cow serum albumin, xanthan gum, carrageenan, pectin, Arabia gum, agar, thickeners such as gellan gum and alginic acid ester are listed as the improving substance for generating foam and for foam stability.

However, based on the research according to the present inventors, among the above substances, since the remaining amount of protein substances in the beverage is decreased through the fermentation process, it is recognized that lots of substances are added to make the required amount of protein remain. For example, when protein which is extracted from peas is used, it is recognized that the remaining ratio before the fermentation process is around 20%, but the remaining ratio is decreased around 5% through the fermentation process. It is recognized that an isoelectric point of the protein is around 4.5 (pH). On the other hand, the fermentation liquid during the fermentation process is decreased to around pH 4.0; thereby lots of proteins are made insoluble and deposited, and removed by filtration after the fermentation process.
Patent Document 1: JP 2001-37462
Patent Document 2: JP 2004-81171

### SUMMARY OF THE INVENTION

It is an object of the present invention to provide a production method of the alcoholic beverage with foaming properties like beer-taste alcoholic beverages with foaming properties, in which a pre-fermentation liquid is processed using a syrup containing sources of carbon, sources of nitrogen, hops, coloring matter, an improving substance for generating foam and for foam stability, and water as raw materials without using barley, wheat and malt. The pre-fermentation liquid is fermented using a brewers' yeast, wherein protein which is used as a source of nitrogen or an improving substance for generating foam and for foam stability is utilized effectively and producing cost is decreased. This production method produces the alcoholic beverage with foaming properties having a unique taste and good quality of the foam.

In order to achieve the above-mentioned object, there is provided according to one aspect of the present invention a production method of an alcoholic beverage with foaming properties which does not use barley, wheat and malt, in which a pre-fermentation liquid is processed using a syrup containing sources of carbon, sources of nitrogen, hops, coloring matter, an improving substance for generating foam and for foam stability, and water as raw materials without using barley, wheat and malt, and the pre-fermentation liquid is fermented using a brewers' yeast,
wherein proteolytic enzyme is used as a part of a substance of raw materials.

According to this, since proteolytic enzyme is used as a part of the substance of raw materials, the protein substance which is used as a source of nitrogen or the improving substance for generating foam and for foam stability can be used effectively, production cost can be reduced, and the alcoholic beverage with foaming properties having unique taste and good quality of the foam can be provided.

Additionally, in the production method of the alcoholic beverage with foaming properties according to the present invention, the proteolytic enzyme has endo-type protease activity or endo-type protease activity.

According to this, since the proteolytic enzyme having endo-type protease activity or endo-type protease activity is used as a part of the substance of raw materials, the foaming properties like generating foam and foam stability are improved and the alcoholic beverage with foaming properties which does not use barley, wheat and malt having refreshing drinkability of aftertaste can be provided.

Additionally, in the production method of the alcoholic beverage with foaming properties according to the present invention, the proteolytic enzyme is added together with the source of nitrogen which acts as a substrate of the enzyme in a mashing process and an enzymatic reaction is performed.

According to this, since the proteolytic enzyme as a part of the substance of raw materials is added together with the source of nitrogen which acts as a substrate of the enzyme to a mashing process and an enzymatic reaction is performed, the foaming properties like generating foam and foam stability are improved and the alcoholic beverage with foaming properties which does not use barley, wheat and malt having the refreshing drinkability of aftertaste can be provided.

Additionally, in the production method of the alcoholic beverage with foaming properties according to the present invention, NaOH is further added to the mashing process so as to be in a range between 12.8 mM and 51.2 mM.

According to this, since NaOH is further added to the mashing process so as to be in a range between 12.8 mM and 51.2 mM, the foaming properties like the generating foam and the foam stability are improved and the alcoholic beverage with foaming properties which does not use barley, wheat and malt having the refreshing drinkability of aftertaste can be provided.

Additionally, in the production method of the alcoholic beverage with foaming properties according to the present invention, the substrate is used with its condensation rate between 5 and 10 fold and the proteolytic enzyme is used in a range between 0.5 and 2 % ratio of use per the substrate for the enzymatic reaction.

According to this, since the substrate is used with its condensation rate between 5 and 10 fold and the proteolytic enzyme is used in a range between 0.5 and 2% ratio of use per the substrate for the enzymatic reaction, the foaming properties like generating foam and foam stability are improved and the alcoholic beverage with foaming properties which does not use barley, wheat and malt having the refreshing drinkability of aftertaste can be provided.

Additionally, in the production method of the alcoholic beverage with foaming properties according to the present invention, a condition of the enzymatic reaction is that a reaction temperature is in a range between 70 and 90 °C and a reaction time in a range between 30 and 60 minutes.

According to this, since the enzymatic reaction is performed where the reaction temperature is in a range between 70 and 90 °C and the reaction time in a range between 30 and 60 minutes, the foaming properties like generating foam and foam stability are improved and the alcoholic beverage with foaming properties which does not use barley, wheat and malt having the refreshing drinkability of aftertaste can be provided.

In order to achieve the above-mentioned object, there is provided according to another aspect of the present invention an alcoholic beverage with foaming properties processed by the production method as described in any one of the above.

According to this, the foaming properties like generating foam and foam stability are improved and the alcoholic beverage with foaming properties which does not use barley, wheat and malt having the refreshing drinkability of aftertaste can be provided.

According to the present invention, there is provided the production method of the alcoholic beverage with foaming properties without using barley, wheat and malt, in which a pre-fermentation liquid is processed using a syrup containing sources of carbon, sources of nitrogen, hops, coloring matter, an improving substance for generating foam and for foam stability, and water as raw materials without using barley, wheat and malt; and the pre-fermentation liquid is fermented using a brewers' yeast. Protein which is used as a source of nitrogen or an improving substance for generating foam and for foam stability is utilized effectively by using a proteolytic enzyme (partially decomposed protein substance which is used as a source of nitrogen or an improving substance for generating foam and for foam stability) as part of substances for material, and producing cost is decreased; and the alcoholic beverage with foaming properties having an unique taste and good quality of the foam.

### BRIEF DESCRIPTION OF THE DRAWINGS

Other objects, features and advantages of the present invention will become more apparent from the following detailed description when read in conjunction with the accompanying drawings, in which:
Fig. 1 is a graph showing a relationship between the remaining ratio and pH of protein changing according to the producing process of the beer-taste alcoholic beverages with foaming properties;
Fig. 2 is a graph showing NIBEM values of beer-taste alcoholic beverages with foaming properties which were produced such that three kinds of proteolytic enzymes were added to pea protein in different ratios of use;
Fig. 3 is a graph showing the total nitrogen (T-N) in the cooled wort, free amino nitrogen (FAN) and the remaining amount of total protein in the pooled alcohol beverage of beer-taste alcoholic beverages with foaming properties which were produced such that three kinds of proteolytic enzymes were added to pea protein in different ratios of use;
Fig. 4 is a graph showing NIBEM values in different condensation rates of pea protein as a substrate;
Fig. 5 is a graph showing the remaining amount of total protein in different condensation rates of pea protein as a substrate;
Fig. 6 is a graph showing NIBEM values when the reaction is performed at different temperatures from 50 to 95°C for 60 minutes reaction period;
Fig. 7 is a graph showing the remaining amount of total protein in pool liquor when the reaction is performed at different temperatures from 50 to 95 °C for 60 minutes reaction period;
Fig. 8 is a graph showing free amino nitrogen (FAN) in a wort when the reaction is performed at different temperatures from 50 to 95 °C for 60 minutes reaction period;
Fig. 9 is a graph showing NIBEM values when the reaction is performing at the condensation rate of a substrate except control is 10 fold with adding 1% or 2% of Sumiteam per pea protein at 80 °C for 30 minutes, 60 minutes and 120 minutes reaction period;
Fig. 10 is a graph showing the remaining amount of total protein when the reaction is performed at the condensation rate of substrate except control is 10 fold with adding 1% and 2% of Sumiteam per pea protein at 80°C for 30 minutes, 60 minutes and 120 minutes reaction period;
Fig. 11 is a graph showing NIBEM values when performing at the condensation rate of the substrate is 10 fold with adding 0.5, 1% and 2% of Sumiteam per pea protein at 80 °C for 30 minutes of reaction period;
Fig. 12 is a graph showing that the total nitrogen (T-N) in cool wort, free amino nitrogen (FAN) and the remaining amount of total protein in pool liquor when performing at the condensation rate of the substrate is 10 fold with adding 0.5, 1% and 2% of Sumiteam per pea protein at 80 °C for 30 minutes reaction period;
Fig. 13 is a graph showing that the remaining amount of total protein in the cool wort when performing at the condensation rate of the substrate is 5 fold at 80°C for 30 minutes reaction period with adding 0, 12.8, 25.6, and 51.2 mM of NaOH into the mashing water and adding 500 ppm of pea protein and adding 2% of Sumiteam LP per pea protein;
Fig. 14 a graph showing NIBEM values when performing at the condensation rate of the substrate is 5 fold at 60 °C for 30 minutes of reaction period with adding 0, 12.8, 25.6, and 51.2 mM of NaOH into the mashing water and adding 500 ppm of pea protein and adding 2% of Sumiteam LP per pea proteinis; and
Fig. 15 is a graph showing progress of fermentation for control and examination.

### DESCRIPTION OF THE PREFERRED EMBODIMENTS

A description will now be given, with reference to the embodiments according to the present invention. Below, the best mode of the present invention is described with preferred embodiments of the alcoholic beverage with foaming properties using proteolytic enzyme as part of a substance which does not use barley, wheat and malt; that is, one embodiment of a production method of beer-taste alcoholic beverages (hereafter, it is described as same).

First, hot water is added to materials of syrup containing sources of carbon, sources of nitrogen as amino acids content materials other than wheat or malt, hops, coloring matter, and an improving substance for generating foam and for foam stability, and they are made into a solution including ingredients of sugar and amino acids. Then, after the solution is boiled, spent hops are removed from the solution and the solution is chilled so that the solution is made to be a pre-fermentation liquid. The pre-fermentation liquid which is produced as described above is fermented using brewers' yeast like an enzyme for beer, the same as the usual production step of beer production, then the produced liquid is stored. By doing the above steps, a beer-taste alcoholic beverage with foaming properties can be obtained without using starch materials like barley, wheat and malt. Also, in general, a flavor adding beer-taste, dietary fibers adding functionality and herbs adding characteristics to the flavor can be added after the fermentation, as necessary. The produced beer-taste alcoholic beverage with foaming properties has the same flavor as beer and also has foaming properties of carbon dioxide.

The above description is a general production method of the beer-taste alcoholic beverages with foaming properties.

One embodiment according to the present invention is that in the production method for the above beer-taste alcoholic beverages with foaming properties, pea protein is selected an a source of nitrogen and suitable proteolytic enzyme is used in the producing process, thereby the producing cost is decreased by using substances effectively and also a unique taste and the forming properties are improved.

Proteolytic enzyme which is used in the present invention is described below in detail, but in which proteolytic enzyme, an endo-type proteolytic enzyme activity is high and it partially decomposes macro molecule protein. In the production method of the above beer-taste alcoholic beverage with foaming properties, such a proteolytic enzyme is added to pea protein which is extracted from peas as a substrate for enzyme in the first step of the producing process and these are dissolved in a portion of hot water which is used for mashing. The reason to use the portion of water of mashing is that pea protein is concentrated and an amount for using the above proteolytic enzyme is restricted. Then, after an enzymatic reaction is performed at 80 to 85°C for 30 minutes, other raw material like syrup, etc., are added, and the rest of the mashing water is added, also hops are added and boiled, spent hops are removed from the pre-fermentation liquid which is finished boiling in a precipitation pool, then the pre-fermentation liquid is chilled to around 10 °C, and the fermentation is performed by adding yeast to the chilled pre-fermentation liquid. Thereby, in the mashing process before fermentation, macro molecule protein included in pea protein is decomposed by the proteolytic enzyme, and a precipitation in the fermentation process is restricted by changing pH. Thus, it is possible to restrict a decrease of protein which contributes to form properties. Therefore, utilization of raw materials rises, and alcoholic beverages with foaming properties having a refreshing taste and improved form properties can be obtained.

Also, the ratio of an appropriate amount of proteolytic enzyme which has high enzymatic activity of the endo-type proteolytic enzyme and pea protein is described below in detail, but pea protein as a substrate is condensed 10 fold, 0.5 to 2% of enzyme amount per pea protein is appropriate, and it is recognized that the highest NIBEM value is shown at 80 to 85 °C for enzymatic reaction temperature. Also, it is preferable that the reaction temperature be 30 to 60 minutes, but the reaction time does not have to be longer than required because of an inactivation of enzymatic activity, and 30 minutes is preferable.

### Example

### Example 1

In the below, examples that were carried out according to the production method of the present invention are described. However, the present invention is not limited to these examples.

Here, in the production method of beer-taste alcoholic beverage with foaming properties, brewing in which a selection of proteolytic enzyme, the most suitable ratio of use of enzyme and substrate, the most suitable reaction temperature and reaction time, the form stability evaluation, and solubility of pea protein in the mashing water are examined, was carried out is explained. Also, these examples were experimentally carried out in 400 liter-sized brewing facilities. Final alcoholic concentration was 5.0 volume% for all examination products.

First, the pre-fermentation liquid is prepared by using the following raw materials.

Used materials: in order to produce the beer-taste alcoholic beverages with foaming properties, pea protein and proteolytic enzyme were added together in the mashing process and they were dissolved by using hot water which is used for mashing. The reason for using a part of the mashing water is to condense pea protein and restrict the amount for use of proteolytic enzyme. After the enzymatic reaction was performed at 80 to 85°C for 30 minutes, syrup like other raw material was added, the rest of the mashing water was also added, and hops were added and the total mixture was boiled. A commercially available product of DE50 was used as syrup for every examination and the total amount of raw materials was adjusted to 69 kg. A solid portion was 75%. Also, DE is an abbreviation of Dextrose equivalent and indicates a saccharification rate of starch. Except for performing additional enzymatic reaction of the proteolytic enzyme, an alcoholic beverage was produced by following the production method of beer-taste alcoholic beverages with foaming properties in the above embodiment of the present invention.

That is, 300-350 L of hot water was added to 240 g of caramel coloring matter (Ikeda Toka Kogyo : Kokuyo caramel, it is the same throughout) and 400 g of hop pellets; the syrup was dissolved further, and this mixture was boiled for 60-90 minutes.

Then, spent hops, etc., were removed from the mixture by the settling tank called Whirlpool, the concentration of the extract was adjusted to 12.0 weight%. The remaining mixture was cooled by the plate cooler to 10 °C, and the pre-fermentation liquid was obtained. The brewers' yeast (thirty million cells/mL) was added in this pre-fermentation liquid, and it was made to ferment at 6-12 °C for 5 days. Then, it was stored at -1 °C.

Using a kieselguhr, the fermentation liquid was filtrated, the yeast removed, and final beer-taste alcoholic beverage with foaming properties was obtained.

The above production method is the production method of the beer-taste alcoholic beverages with foaming properties which uses proteolytic enzyme, but a relationship between a condition in which the proteolytic enzyme is used in the producing process and the foam stability was examined in the production method.

Selection of the most suitable proteolytic enzyme

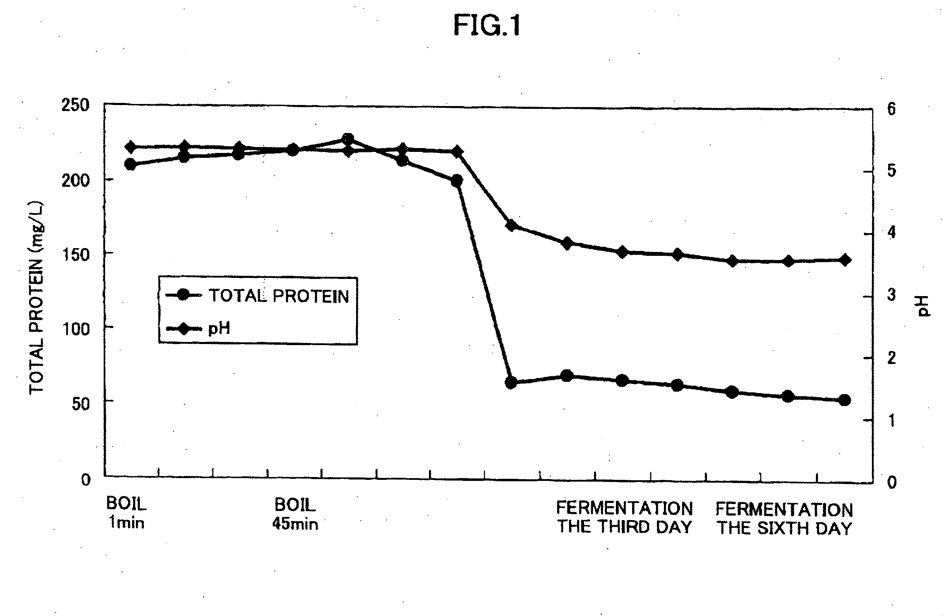

In the present example, pea protein extracted from peas was used as a source of nitrogen. As shown in FIG. 1, when each process was traced with adding pea protein to the mashing process, pH was decreased through the isoelectric point of pea protein due to the transferring of the total protein included in the pre-fermentation liquid to the fermentation process; thereby pea protein was precipitated and the remaining amount of pea protein dissolved in the pre-fermentation liquid was decreased dramatically. Thus, macro molecular protein was partially decomposed by adding mainly protease, i.e. proteolytic enzyme and a precipitation removal did not occur through the fermentation process; thereby beer-taste alcoholic beverage with good foaming properties was produced without using substances idly. Also, if protein is decomposed to amino acid, it is understood that the total amount of protein is decreased and the forming properties are deteriorated. Thus, it is recognized that the decomposition needs to be stopped in partial decomposition.

An investigation was performed such that whether the quality of the foam is improved by adding each proteolytic enzyme which is commercially available (i.e., enzyme agents) in the above producing process. Although enzyme agents which did test were lots of enzymes like Sumiteam FP, Sumiteam FLAP, Sumiteam MP, Sumiteam LP, Sumiteam RP (these are provided by Shin-Nihon Kagaku Kogyo), Protease M (Amano Enzymes), Flavorzyme 500 MG (Novo), Denapcine 10P, Denateam AP (these are provided by Nagase), Papaine (wako-jyunyaku), most enzymes were not effective or the foam stability extremely slightly improved. However, among enzymes which were tested, it is recognized that Sumiteam LP and Sumiteam MP were effective for improving the foam properties. Here, the NIBEM method is used for evaluating the foaming properties. The NIBEM method is authorized as an official technique in EBC (European Brewing Committee) and is used for evaluating the foam stability in lots of European and American beer companies. In the NIBEM method, a value measuring the foam stability of beer and low-malt beer under a constant condition is represented as NIBEM value (sec); it is generally used for evaluating the foam stability of beer and low-malt beer. That is, if the NIBEM value shows high value, it is recognized that the foam stability is good.

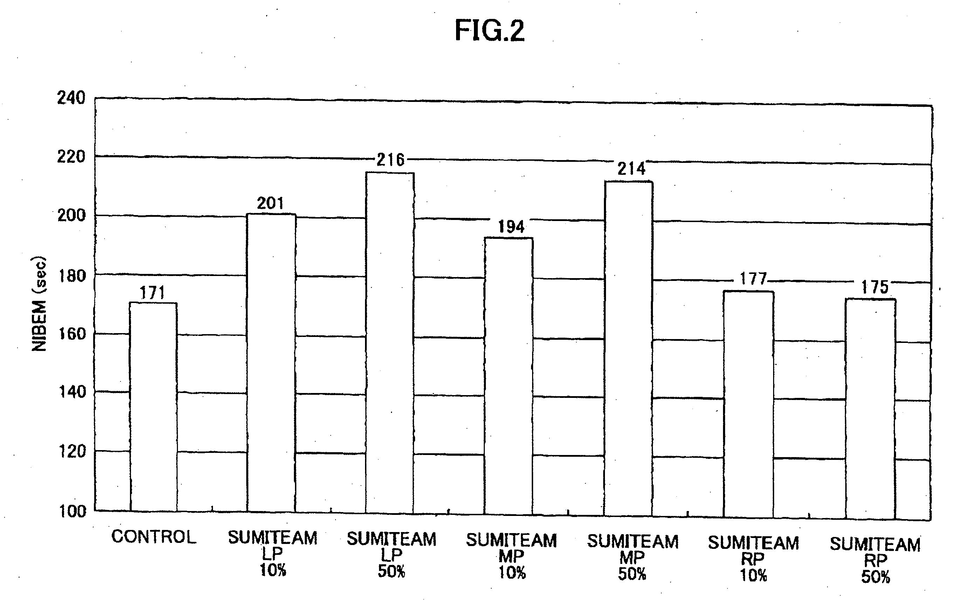

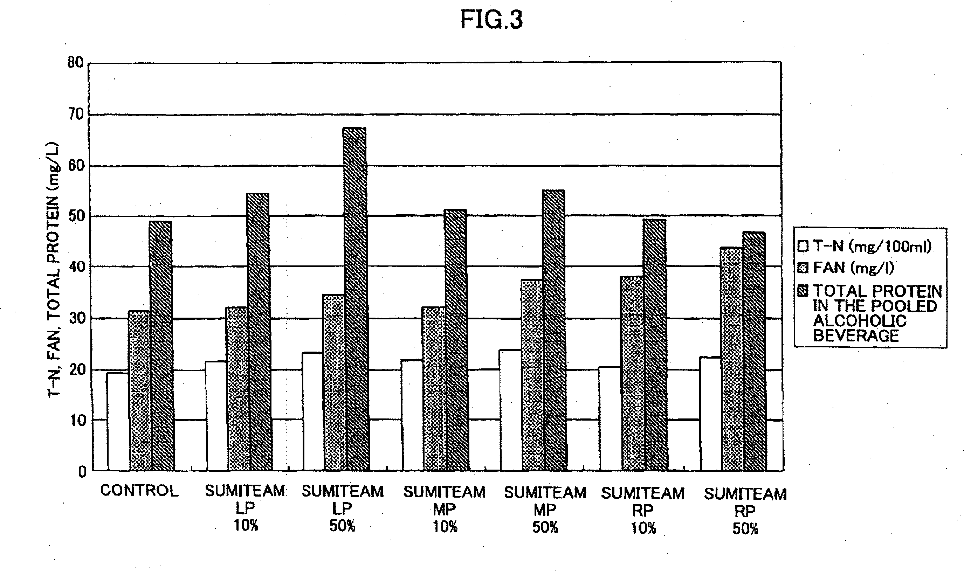

In FIG. 2, NIBEM values of beer-taste alcoholic beverages with foaming properties when Sumiteam LP, Sumiteam MP and Sumiteam RP were added to pea protein in 10% and 50% are shown. It was recognized that Sumiteam LP and Sumiteam MP were effective for improving the NIBEM values. On the other hand, it was not recognized that Sumiteam RP was effective for improving the NIBEM value. In order to investigate the cause, the total nitrogen (T-N) in the cooled wort, free amino nitrogen (FAN) and the remaining amount of total protein in the pooled alcohol beverage were measured. The results are shown in FIG. 3. Sumiteam LP which is the most effective for improving the NIBEM value leads to little increase of FAN in the cooled wort, but the remaining amount of total protein in the pooled alcohol beverage was increased depending on the amount of addition of Sumiteam LP. This trend appeared the same as the NIBEM value. On the other hand, Sumiteam RP which is not recognized as effective for improving the NIBEM value leads to increase significantly the FAM amount in the cooled wort, but the remaining amount of total protein in the pooled alcohol beverage was not increased and decreased in the sample of large amount of addition of Sumiteam RP. This trend appeared the same as the RIBEM value. Because of this, Sumiteam LP has mainly high activity of endo-type protease, non-precipitated and non-removed protein was increased in the pooled alcoholic beverage by partially decomposing the macro molecular protein. Proten which was produced by partial decomposition has an effective property for the foam; thereby it is thought that the total amount of protein and the NIBEM value show similar behaviors. On the other hand, Sumiteam RP had a dramatically increased FAN amount in the cooled wort, and it is recognized that the exo-type protease activity is high. Because of this, the total amount of protein in the pooled alcoholic beverage was not increased; it was decreased in samples that have a large amount of addition of Sumiteam RP. As a result of this, it is recognized that it led to the decreasing of the NIBEM value. Thus, an improvement effect of the foam stability depends on the kind of protease, i.e., proteolytic enzymes, so that the selection of enzymes is important.

Therefore, in the production method of the present invention, it is important to select a proteolytic enzyme which decomposes pea protein into protein contributing to the foaming properties.

Investigation of the most suitable concentration of substrate

The investigation was performed where the amount of addition of Sumiteam were 10% and 50% per the amount of pea protein at the stage of selecting the above suitable proteolytic enzyme, i.e., enzyme agents, and its effect was inspected. However, enzyme agents are generally expensive and a reduction plan of the amount of addition is essential to apply to a real producing process. In order to accelerate the enzymatic reaction, it is effective to optimize conditions such as reaction temperature and reaction time and to increase the concentration of the substrate. In the conventional method, the concentration of substrate is about 0.1% and very light, thereby it is thought that an effective reaction of the substrate and the enzyme agent had not achieved yet. Then, the improvement effect of the quality of the foam was investigated so as to adjust the amount of addition of Sumiteam to 1% by increasing the concentration of pea protein as the substrate due to decreasing the mashing water, altering the mashing conditions for samples with pea protein and samples without pea protein.

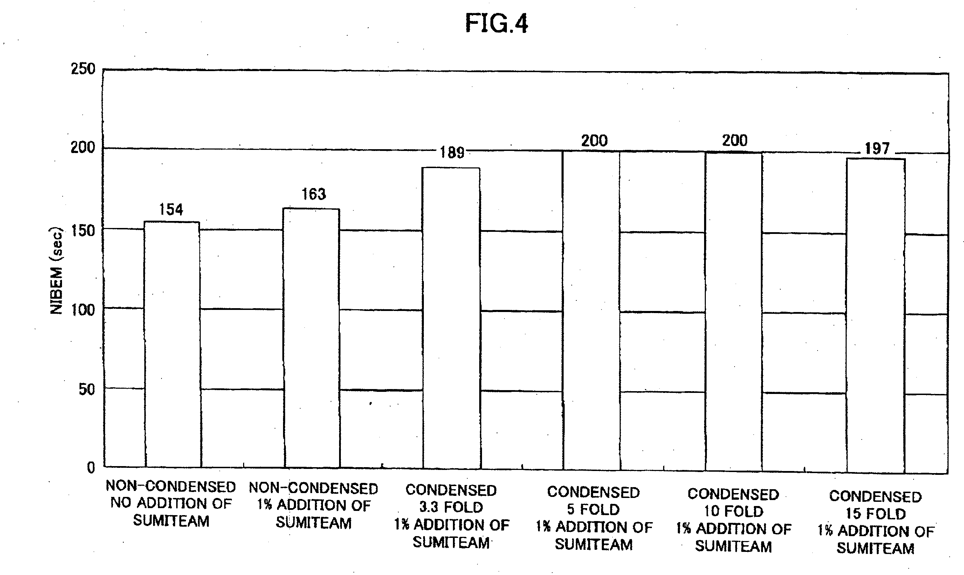

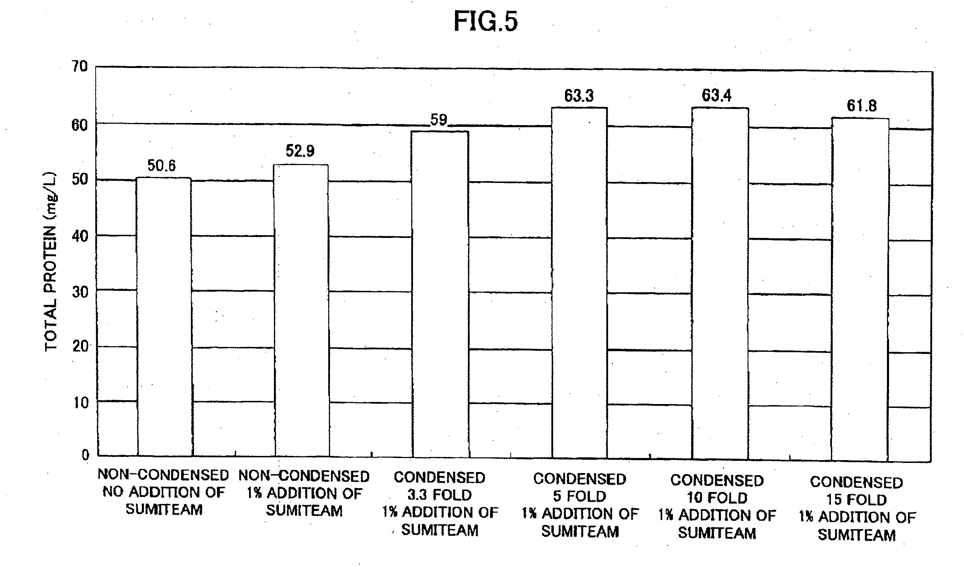

As for the results of NIBEM value measurement (see FIG. 4) and total amount of protein measurement (see FIG. 5), a tendency accorded. That is, a sample which has non-condensed pea protein and an addition of Sumiteam 1% showed no drastic improvement effect of NIBEM value compared to a control sample (the conventional method, no addition of Sumiteam). As the condensation rate was increased, the NIBEM value was increased gradually. When pea protein was condensed to 5 to 10 fold, it was recognized that the improvement effect of the NIBEM value was the same (46 points) as that for a sample which had non-condensed pea protein and an addition of Sumiteam 50%. However, when the condensation rate of the substrate was increased to 15 fold, there was a tendency that both NIBEM value and total amount of protein were slightly decreased. There might be a possibility to have high viscosity such that a mixing and stirring of pea protein and the mashing water can not be performed enough and the solubility falls, too. It is more preferable than required to raise the condensation rate. It is desirable that the condensation rate be 5 - 10 fold.

Investigation of the most suitable reaction temperature

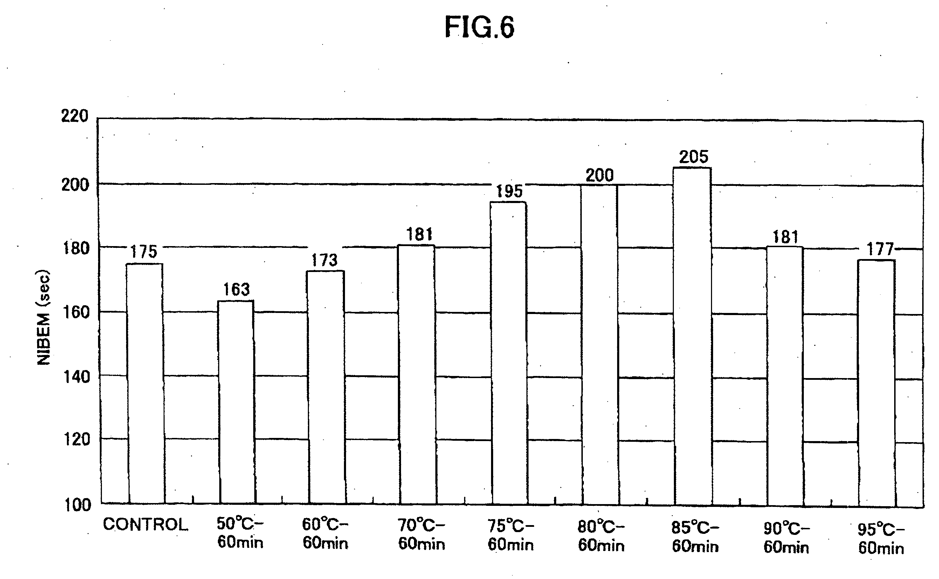

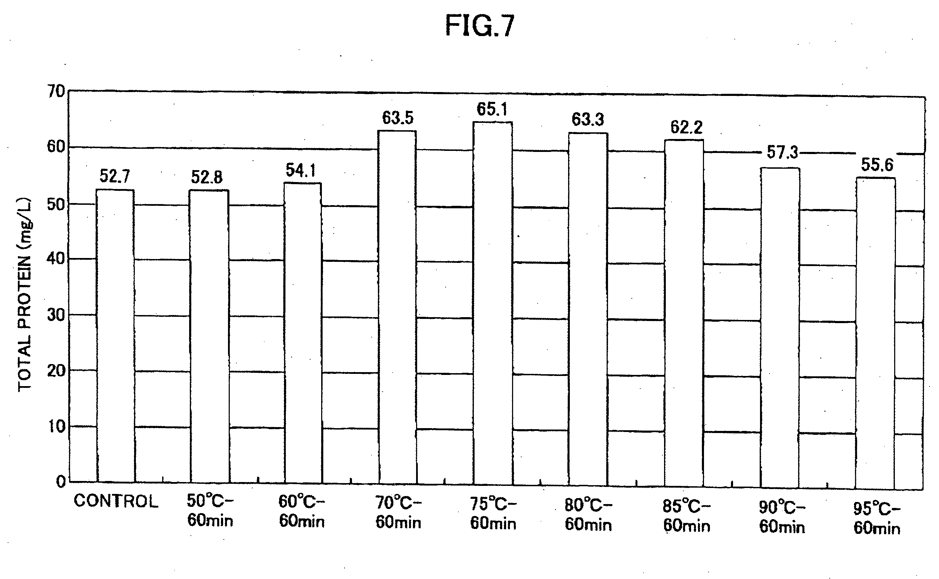

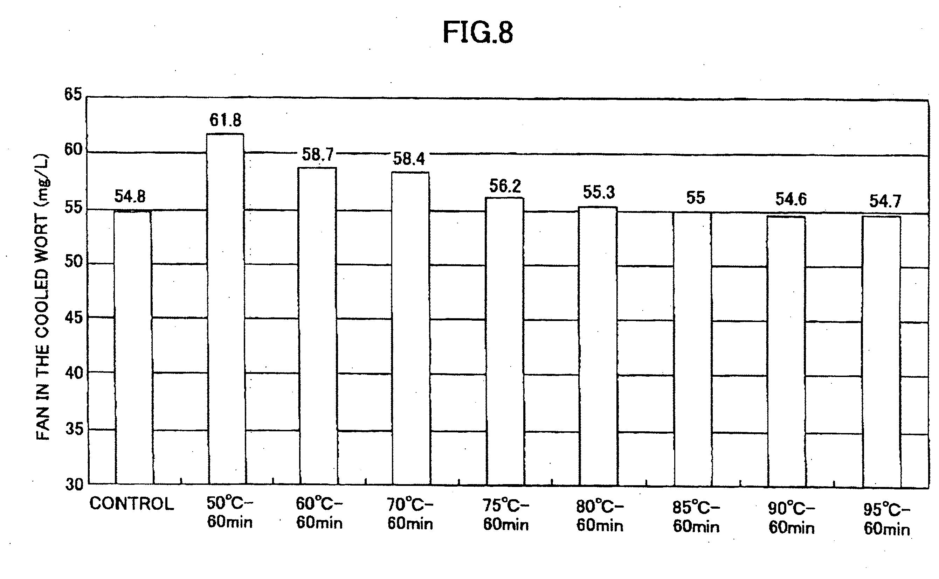

In order to investigate the most suitable temperature (i.e., it is not the temperature to be suitable for a condition) for improving the NIBEM value of Sumiteam LP, the wort was prepared by varying the reaction temperature every 5 - 10°C in a range from 50°C- 95 °C. Also, the condensation rate was 5 fold, and 1% of Sumiteam per pea protein was added, except the control sample. As a result, it was recognized that the NIBEM value was the highest value in a range between 80 **°**C and 85°C of the reaction temperature of enzyme (see FIG. 6). When the reaction temperature becomes 90 °C, the improvement effect of the foam stability suddenly decreases. When the reaction temperature becomes 95 °C, the NIBEM value was the same as that of the control sample. That is, it is thought that its enzymatic activity was deactivated by heat. On the other hand, when the reaction temperature is decreased, after all, the NIBEM value fell. Especially, the NIBEM value for a sample at 50°C which is close to the temperature to be suitable for a condition of the enzyme agent (according to a product catalogue of a producing company, the suitable temperature is around 50 °C) was lower than that of the control sample. It is thought that a decomposition of protein into low molecules progressed and that the protein which was effective for the foaming properties decreased. Total remaining amount of protein in the pooled alcoholic beverage is shown in FIG. 7. The maximum value was shown at 75°C which was a little bit lower than the behavior of the NIBEM value. It is thought that all measured amounts as total protein do not always work effectively for the foam. The amount of FAN in the cooled wort is shown in FIG. 8. Because the amount of FAN was not increased when the reaction temperature was greater than 80 °C, it is thought that the exo-type protease activity was affected by heat inhibition. When the reaction temperature was decreased, the amount of FAN was increased gradually. Based upon the foregoing, when Sumiteam was added at a range between 80°C and 85 °C, protein was decomposed partially due to the effect of the endo-type protease and changed to protein which remained even though through the pH dropped. The NIBEH value is increased because this protein has effectively worked on the foam. On the other hand, when the reaction temperature is decreased, the decomposition of protein became superabundant. Thereby, protein which is effective on the foam was decreased and FAN was increased. Based on this, the endo-type protease is more heat resistant than the exo-type protease. For the purpose of improving the quality of the foam, the reaction temperature of Sumiteam is important and it is preferable to perform at a range between 80 °C and 85 °C.

### Investigation of the most suitable reaction time

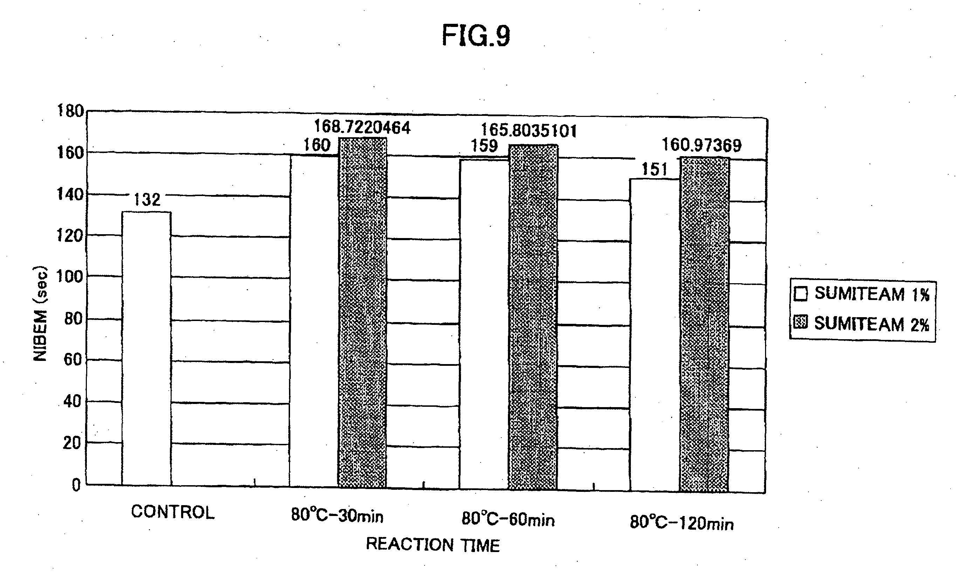

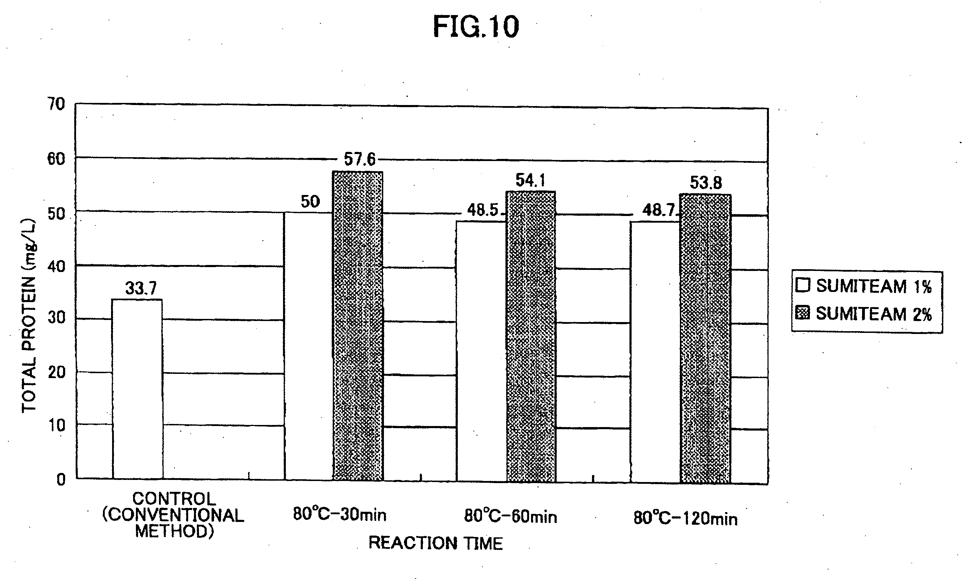

Except the control sample, adjusting the condensation rate to 10 fold and adding 1% and 2% of Sumiteam per pea protein, reactions were performed at 80 °C for 30 minutes, 60 minutes and 120 minutes. As a result, there was no great difference for NIBEM value between the sample of 30 minutes and the sample of 60 minutes (see FIG. 9). However, it was recognized that the NIBEM value was decreased for the sample of 120 minutes. Since the total amount of protein is decreased as the reaction time takes more time (see FIG. 10), it is not preferable to take more reaction time than required; it is desirable to perform for about 30 minutes. In the actual producing process, once the amount of reaction was over a certain amount by adding hot water after the reaction, it is thought that enzymes are deactivated because of an increase of the water temperature. Therefore, one needs to be careful to avoid the reaction time with Sumiteam taking too much time.

The adding amount of Sumiteam and the foam stability

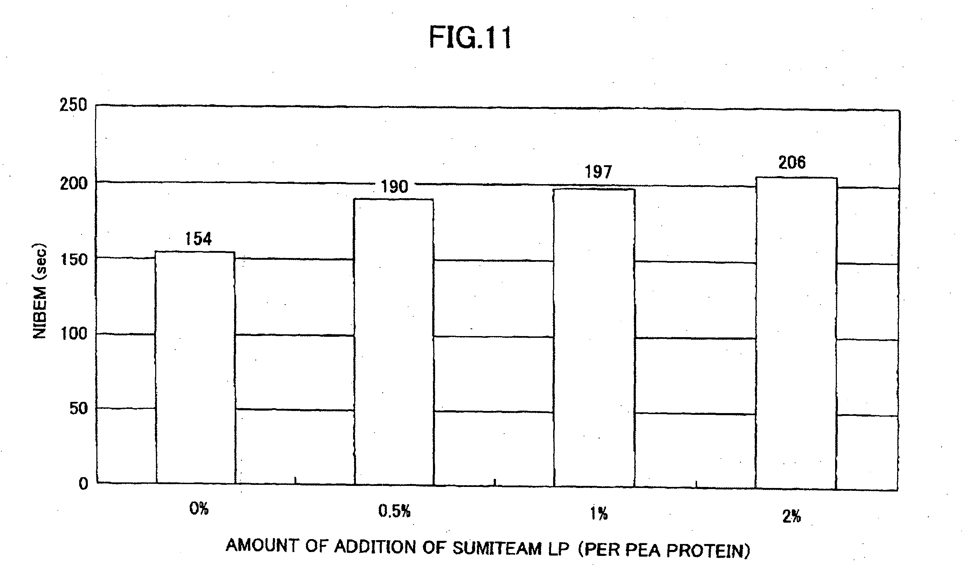

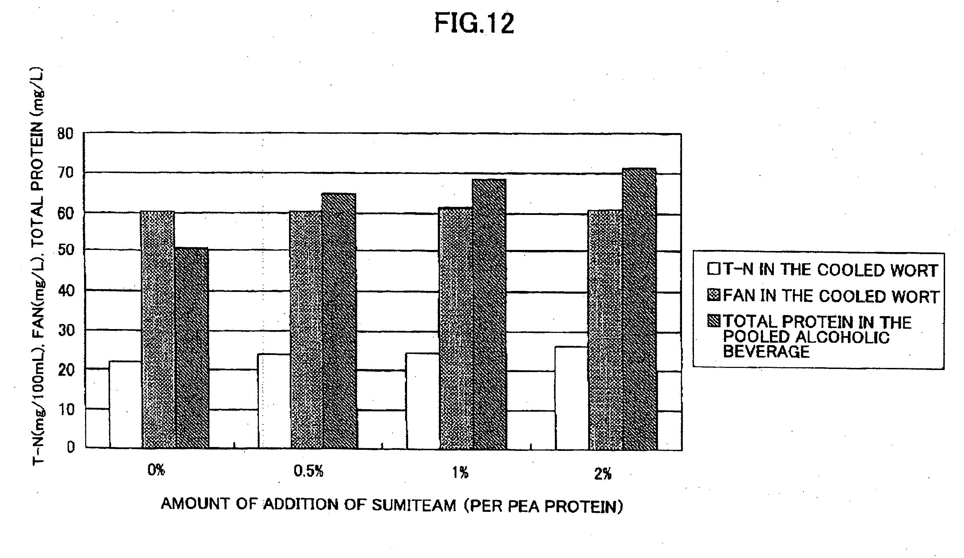

Adjusting the condensation rate to 10 fold and adding 0%, 0.5%, 1% and 2% of Sumiteam per pea protein, reactions were performed at 80 °C for 30 minutes. Then a relationship between the adding amount of Sumiteam and the foam stability was investigated. NIBEM values are shown in FIG. 11, and T-N in the cooled wort, FAN and the remaining amount of total protein in the pooled alcohol beverage are shown in FIG. 12. NIBEM values and the remaining amount of total protein in the pooled alcohol beverage were increased along with increasing the adding amount of Sumiteam. The increase of the addition amount of Sumiteam is effective in improving the foam stability; considering cost, it is effective in controlling the quality of the foam with the adding amount of Sumiteam.

### Improvement plan of the pea protein solubility in wort

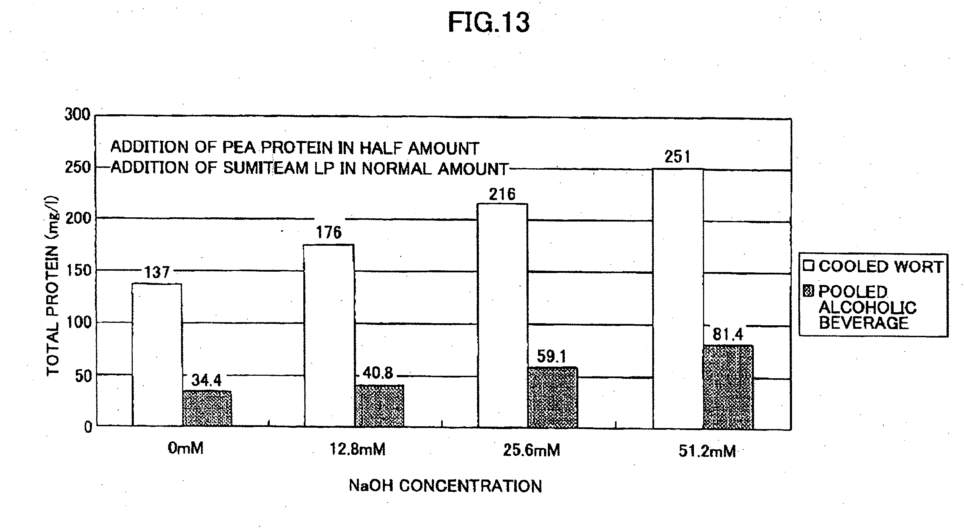

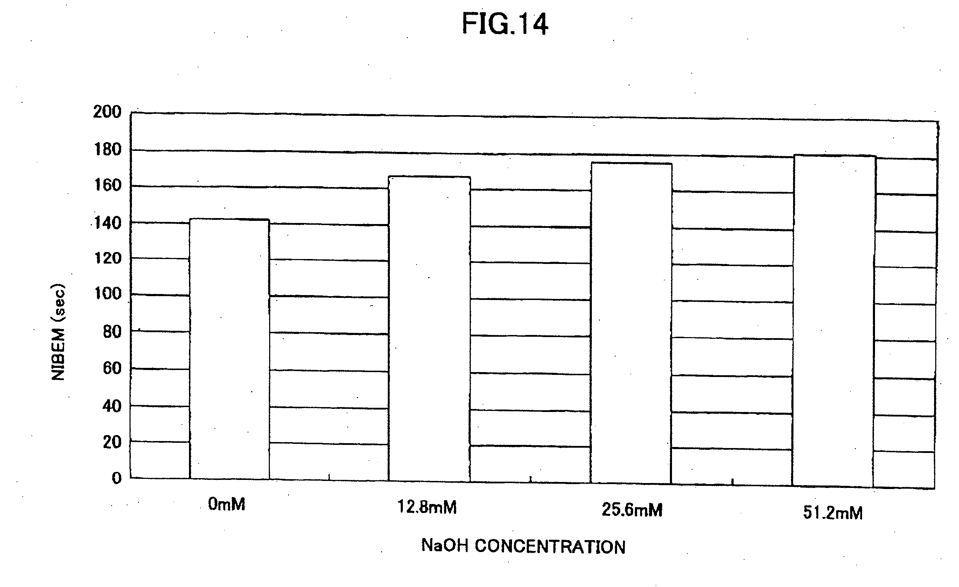

In the above, it is already described that the remaining amount of total protein in the pooled alcohol beverage was increased by adding Sumiteam LP; as a result of this, it led to the improvement of NIBEM value. In order to further improve the quality of the foam, a method to increase the pea protein solubility in wort was examined. In general, protein has a characteristic to dissolve easily in alkaline solution. Then, NaOH was added to the mashing water so as to be 0 mM, 12.8 mM, 25.6 mM, and 51.2 mM of NaOH. In this examination, 500 ppm of pea protein was added. Adjusting the condensation rate to 5 fold and adding 2% of Sumiteam LP per pea protein (the same amount in the case of adding 1% of pea protein when pea protein is 1000 ppm), reactions were performed at 80 °C for 30 minutes. After finishing the reaction, the same amount of HCl was added and neutralized, then the boiling process was performed. Also, the present examination was performed with a half volume of the usual adding amount of pea protein. As a result, a transferring rate of the total protein to the cooled wort was reached 50% at the maximum, as shown in FIG. 13. Also, the remaining amount rate of total protein in the pooled alcohol beverage was 2.6 times greater than that of usual condition. Measurement results of NIBEM values are shown in FIG. 14. After the transferring rate to the cooled wort is increased by adding an alkaline solution, further improvement of the quality of the foam can be possible with Sumiteam treatment.

### Example 2

Next, the substance to use was replaced with soy bean/powder excluding fat processed by soy bean from pea protein, and alcoholic beverages with foaming properties were produced. Then, a confirmation was performed about effects of the present invention. A producing condition was the same as that of example 1, basically, and 1000 ppm of soy bean/powder excluding fat was used, Sumiteam LP as an enzyme agent was used and 1% of Sumiteam LP per soy bean/powder excluding fat was added. Also, its reaction temperature was 80 °C and its reaction time was 30 minutes. Also, a control sample was produced by the same method in the example 1, and 1000 ppm of soy bean/powder excluding fat was used.

As a result, compared to the control sample in which the total amount of protein in the pooled alcoholic beverage was 43 mg/l and the NIBEM value was 147, the total amount of protein in the pooled alcoholic beverage was 52 mg/l and NIBEM value was 165 in the case of adding an enzyme agent. Thereby, the quality of the foam was improved.

Therefore, it is recognized that the quality of the foam of the beer-taste alcoholic beverages with foaming properties can be improved by increasing the remaining amount of total protein in the pooled alcoholic beverage due to the partial decomposition of protein caused by an enzyme agent. Because of this, more superior foam quality can be made possible by using processed hops and an improving substance for generating foam and for foam stability or by using a combination of these substances.

### Example 3

Next, another example to produce the bear-taste alcoholic beverages with foaming properties is explained.

During the mashing process, pea protein which was used in example 1 was suspended in water (or hot water) and diffused uniformly so as to be 20 weight% or below. In the case of the present example, after pea protein was diffused in water so as to 10 weight% and heated up to 40 to 60 °C, the proteolytic enzyme (protease (Sumiteam FP)) was added and a reaction was performed for 6 to 24 hours. Also, the above range of temperatures yields a reaction temperature that is suitable for protease which was used for this example. Also, the amount of use of protease was in a suitable range between 1 and 5 weight% per pea protein, and 3 weight% of protease was used and the reaction time was 24 hours in this example.

The beer-taste alcoholic beverage with foaming properties was obtained with the same raw materials and the production method as example 1 using the obtained decompositions of pea protein. On the other hand, another beer-taste alcoholic beverage with foaming properties was produced as a comparative example (control) of the present example. In this comparative example, sources of nitrogen for brewing which nitrogen was obtained by hydrolysis of rice was used, instead of using decomposition of pea protein. Also, other substances and the production method were completely the same as the above described example. In the below, each amino acid concentration and amino acid composition as sources of nitrogen included in the pre-fermentation liquid are shown.

**TABLE 1**

| Amino acid concentration and amino acid composition of pre-fermentation liquid | | | | |
|---|---|---|---|---|
| | Amino acid concentration (mg/L) | | Composition ratio (%) | |
| | Control | Examination sample | Control | Examination sample |
| Asp | 23 | 14 | 4.4 | 3.0 |
| Thr | 19 | 20 | 3.6 | 4.1 |
| Ser | 23 | 25 | 4.3 | 5.3 |
| Asn | 51 | 58 | 9.8 | 12.1 |
| Glu | 29 | 25 | 5.6 | 5.3 |
| Gln | 4 | 4 | 0.8 | 0.9 |
| Lys | 18 | 33 | 3.5 | 6.9 |
| Arg | 64 | 51 | 12.3 | 10.8 |
| Val | 38 | 34 | 7.3 | 7.2 |
| Met | 18 | 1 | 3.4 | 0.3 |
| Ile | 28 | 33 | 5.4 | 6.9 |
| Leu | 62 | 60 | 11.9 | 12.7 |
| His | 10 | 11 | 2.0 | 2.2 |
| Gly, | 11 | 9 | 2.1 | 1.9 |
| Ala | 31 | 23 | 5.9 | 4.9 |
| Tyr | 32 | 25 | 6.2 | 5.3 |
| Phe | 40 | 38 | 7.6 | 8.0 |
| Trp | 6 | 5 | 1.1 | 1.0 |
| Pro | 9 | 3 | 1.7 | 0.7 |
| g-ABA | 5 | 2 | 1.0 | 0.5 |
| Total | 522 | 475 | 100.0 | 100.0 |

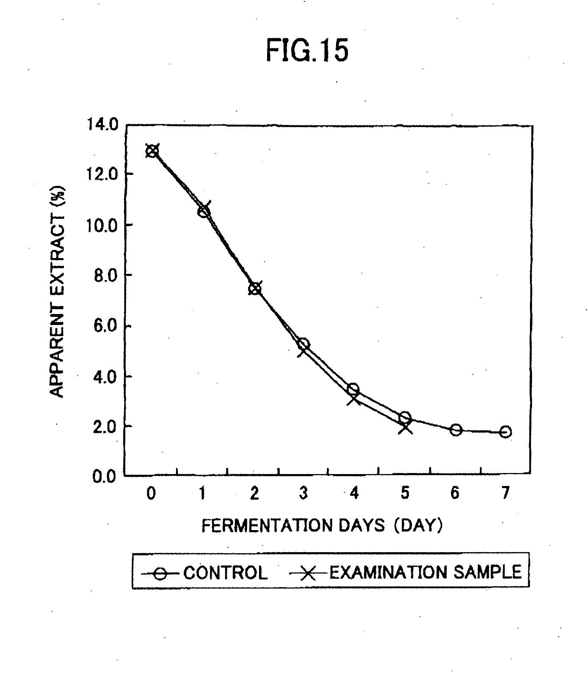

Also, fermentation progress is shown in FIG. 15.

As shown in table 1, it is recognized that among amino acids, methionine content was drastically decreased in the case of the present example. That is, other free amino acids contents except methionine have no big differences, but only methionine content is remarkably small. Also, it is recognized that the fermentation period of the present example is shorter than 2 days compared to that of the control, as shown in FIG. 15. These characteristics are not found in example 1.

Next, the obtained beer-taste alcoholic beverage with foaming properties was analyzed.

In the below, contents of four components derived from methionine were analyzed, and are shown in Table 2 (four components from the top of Table 2).

Compared to the comparative example (control), it is recognized that contents of four components are remarkably small for the example (examination). This is obviously based on the fact that the methionine content was drastically decreased in the above pre-fermentation liquid. This leads to a result that "smell of sulfide" and "smell of sulfur" based on the above four components are obviously less compared to the comparative example as shown in a result of sense examination (table 3) shown in below. Also, "bitterness" was decreased as concerning the taste, and it was obvious that the present example is superior in "refreshness aftertaste".

**TABLE 2**

| Analytical result of compounds included in the product | | |
|---|---|---|
| | Control | Examination sample |
| S-methyl thioacetate | 28.8 | 10.1 |
| Ethyl thioacetate | 0.6 | 0.3 |
| Methionol | 895 | 551 |
| 3-methyl thiopropylacetate | 1.0 | 0.3 |
| Hydrogen sulfide | 7 | 10 |
| Dimethyl sulfide | 0.7 | 0.5 |
| Methyl mercaptane | 0.7 | 0.7 |
| Dimethyl disulfide | 0.03 | 0.03 |
| Dimethyl trisulfide | 0.00 | 0.00 |

**TABLE 3**

| Result of sense examination of the product | | | |
|---|---|---|---|
| | | Control | Examination sample |
| Total evaluation | A | 2 | 3 |
| | B | 1 | 2 |
| | C | 3 | 1 |
| Smell | Smell of sulfide | 5 | 0 |
| | Smell of sulful | 5 | 3 |
| Taste | Bitterness | 5 | 3 |
| | Sour taste | 5 | 10 |
| Aftertaste | Non-refreshing drinkability | 7 | 3 |

Also, the foam stability is shown in Table 4 below. That is, it is recognized that the foam stability of the present example was better than that of the comparative example (control). The same as the result of the example 1, this verifies that a part of pea protein was partially decomposed by the decomposing treatment for pea protein with protease, and protein contributing to the foam stability was increased.

**TABLE 4**

| Foam stability of the product | | |
|---|---|---|
| | Control | Examination sample |
| NIBEM(sec) | 147 | 159 |

As explained above, based on the above result, in the production method of the alcoholic beverage with foaming properties according to the present invention, the protein substance which is used as raw material can be effectively utilized by using proteolytic enzymes having the endo-type protease activity which is represented by enzyme agents such as Sumiteam LP and Sumiteam MP.

Therefore, according to the present invention, unique taste having the improvement of the quality of the foam and refreshing drinkability which is a characteristic for the alcoholic beverage with foaming properties without using barley, wheat and malt can be achieved at less cost.

The present invention is not limited to the specifically disclosed embodiment, and variations and modifications may be made without departing from the scope of the present invention.

The present application is based on Japanese Priority Application No.2005-012714 filed on January 20, 2007 and No.2005-295287 filed on October 7, 2007, the entire contents of which are hereby incorporated by references.

## Claims

1. A production method of an alcoholic beverage with foaming properties which does not use barley, wheat and malt, in which a pre-fermentation liquid is processed using a syrup containing sources of carbon, sources of nitrogen, hops, coloring matter, an improving substance for generating foam and for foam stability, and water as raw materials without using barley, wheat and malt, and the pre-fermentation liquid is fermented using a brewers' yeast,
wherein a proteolytic enzyme is used as a part of the substance of the raw materials.

2. The production method of an alcoholic beverage with foaming properties as claimed in claim 1,
wherein the proteolytic enzyme has endo-type protease activity or endo-type protease activity.

3. The production method of an alcoholic beverage with foaming properties as claimed in claims 1 or 2,
wherein the proteolytic enzyme is added together with the source of nitrogen which acts as the substrate of the enzyme to a mashing process and an enzymatic reaction is performed.

4. The production method of an alcoholic beverage with foaming properties as claimed in claim 3,
wherein NaOH is further added to the mashing process so as to be in a range between 12.8 mM and 51.2 mM.

5. The production method of an alcoholic beverage with foaming properties as claimed in claims 3 or 4,
wherein the substrate is used with its condensation rate between 5 and 10 fold and the proteolytic enzyme is used in a range between 0.5 and 2% ratio of use per the substrate for the enzymatic reaction.

6. The production method of an alcoholic beverage with foaming properties as claimed in claim 5,
wherein a condition of the enzymatic reaction is that a reaction temperature is in a range between 70 and 90°C and a reaction time is in a range between 30 and 60 minutes.

7. An alcoholic beverage with foaming properties processed by the production method as claimed in any one of claims 1 to 6.
